# EUROPÄISCHE PATENTSCHRIFT

(11) **EP 1 879 945 B1**
(45) Veröffentlichungstag und Bekanntmachung des Hinweises auf die Patenterteilung: **05.08.2009**
(21) Anmeldenummer: 06754923.8
(22) Anmeldetag: 28.04.2006
(51) Int. Cl.: C08J 3/20, C08K 5/00, C08L 97/02

(54) **VERWENDUNG VON FESTEN PIGMENTZUBEREITUNGEN ZUR EINFÄRBUNG VON CELLULOSE/POLYMER-VERBUNDWERKSTOFFEN**
USE OF SOLID PIGMENT PREPARATIONS FOR DYEING COMPOSITE CELLULOSE/POLYMER MATERIALS
UTILISATION DE PREPARATIONS PIGMENTAIRES SOLIDES POUR COLORER DES MATERIAUX COMPOSITES A BASE DE CELLULOSE ET DE POLYMERE

(30) Priorität: 02.05.2005 DE 102005020742
(43) Veröffentlichungstag der Anmeldung: 23.01.2008
(73) Patentinhaber: BASF SE, 67056 Ludwigshafen (DE)
(72) Erfinder: GARCIA ESPINO, Andres Carlos, 68165 Mannheim (DE); KRÜSEMANN, Juliane, 67069 Ludwigshafen (DE); PETER, Werner, Hackettstown, Nj 07840 (US)
(74) Vertreter: Huhn, Michael
(86) Internationale Anmeldenummer: PCT/EP2006/061924
(87) Internationale Veröffentlichungsnummer: WO 2006/117342

(56) Entgegenhaltungen:
- WO-A-20/04000903
- DE-A1- 2 042 496
- DE-A1- 10 233 081
- US-A1- 2004 076 847

## Beschreibung

Die vorliegende Erfindung betrifft die Verwendung von festen Pigmentzubereitungen, die als wesentliche Bestandteile
(A) 30 bis 90 Gew.-% mindestens eines Pigments und
(B) 10 bis 70 Gew.-% mindestens eines wasserlöslichen oberflächenaktiven Additivs enthalten, zur Einfärbung von Cellulose partikel/Polymer-Verbundwerkstoffen durch Einfärben der Cellulose partikel. Cellulose/Polymer-Verbundwerkstoffe, insbesondere Lignocellulose/Polymer- oder Holz/Polymer-Verbundwerkstoffe (WPC: Wood Polymer Compound oder Wood Plastic Composite) zeichnen sich dadurch aus, daß sie sowohl die Eigenschaften von Holz als auch die Eigenschaften von Kunststoff aufweisen. Weiterhin ist von Vorteil, daß sie auf Basis von Rohstoffen aus dem Recycling hergestellt werden können. Sie sind für eine Vielzahl von Anwendungen von Interesse. Beispielhaft genannt sei die Verwendung als Strukturelement in der Bauindustrie, z.B. als Trennwand, Dach, Fußboden, Fensterrahmen und Verkleidung, sowie auch als Verpackungsmaterial.

Die in den Verbundwerkstoffen eingesetzten Cellulosepartikel können unterschiedliche Morphologie und dementsprechend unterschiedliche größte Partikeldurchmesser von etwa 1 bis 10 mm (Späne) über 0,1 bis 1 mm (Fasern) bis 0,01 bis 0,1 mm (Staub) aufweisen. Je feinteiliger die Cellulosepartikel sind, umso größer ist das Fassungsvermögen der Polymermatrix für diese Partikel, jedoch nimmt die Zugfestigkeit des Verbundwerkstoffs in der gleichen Richtung ab.

Holz stellt das zur Zeit bevorzugte Cellulosematerial dar, wobei sowohl Weichhölzer, z.B. Pinie und Zeder, als auch Harthölzer, z.B. Eiche und Ahorn, verwendbar sind. Daneben sind auch andere pflanzliche Materialien geeignet, z.B. Fasern aus Sisal, Flachs, Hanf, Jute, Baumwolle und anderen Getreiden, Bambus, Stroh, Schilf, Kokosfasern, Bananenfasern, Flachsschäben, Reisschalen und Erdnußschalen.

Als Polymerkomponente werden in der Regel thermoplastische Polymere verwendet. Bevorzugte Polymere sind insbesondere Polyethylen, Polypropylen und Polyvinylchlorid, selbstverständlich sind jedoch auch andere Polymere, wie ABS (Pfropfcopolymerisate von Acrylnitril und Styrol auf Butadienkautschuke), ASA (Pfropfcopolymerisate von Styrol und Acrylnitril auf Polyalkylacrylatkautschuke), SAN (Styrol-Acrylnitril-Copolymere) und PU (Polyurethane), geeignet.

In der Regel liegt das Mischungsverhältnis bei 40 bis 95 Gew.-% Cellulosepartikel und 5 bis 60 Gew.-% Polymer.

Die Herstellung der Cellulose/Polymer-Verbundwerkstoffe erfolgt im allgemeinen so, daß zunächst zum Ausgleich des Dichteunterschieds zwischen Polymer und Cellulosepartikeln ein Mischgranulat hergestellt wird. Dazu werden Polymer und Cellulosepartikel zunächst in einen Heizmischer dosiert, in dem das Polymer aufgeschmolzen und mit den Cellulosepartikeln gemischt wird. Diese Mischung wird dann in einem Kühlmischer granuliert. Das Granulat wird anschließend extrudiert und kann durch Spritzguß in die gewünschte Form gebracht werden.

In der Regel werden dabei Additive zugesetzt, die die Kompatibilität von Cellulosekomponente und Polymerkomponente und/oder die Interphasenhaftung erhöhen (z.B. maleinsäuremodifizierte Polyolefine oder Isocyanate) oder die Prozeßfähigkeit der Extrusion begünstigen (z.B. Harze, Wachse).

Weiterhin werden üblicherweise Additive zur Modifizierung der technischen Eigenschaften der Verbundwerkstoffe (Zugfestigkeit, Dichte, Flexibilität, Stoßempfindlichkeit, Wärmebeständigkeit), zu ihrem mechanischen oder chemischen Schutz, zur Erhöhung ihrer Lebensdauer und zu ihrer ästhetischen Gestaltung eingesetzt. Solche Additive können z.B. Schaummittel zur Aufschäumung der Polymermatrix, Fließadditive, thermische Stabilisatoren, Biozide, Insektizide, Antioxidantien, UV-Lichtschutzmittel, Antistatika, Flammschutzmittel, Füller und Farbmittel sein.

Zur Einfärbung von Cellulose/Polymer-Verbundwerkstoffen sind verschiedene Vorgehensweisen bekannt.

In der DE-A-20 42 496 werden für diesen Zweck granuläre Farbmittelkonzentrate beschrieben, die 20 Gew.-% einer 1:1-Mischung von C.I. Pigment Blue 15 und einem blauen Reaktivfarbstoff oder 20 Gew.-% nur des Pigments oder Farbstoffs und 80 Gew.-% eines Polyethylenwachses enthalten. Die Konzentrate werden mit Holzmehl und Polymerkomponente gemischt und dann gemeinsam extrudiert.

In der WO-A-02/103113 werden Verbundwerkstoffe auf Basis von Holzmehl hergestellt, die an der Oberfläche den Eindruck einer Holzmaserung vermitteln, indem eine Kombination von Pigment/Olefin-Masterbatch und nicht näher beschriebenem flüssigen Farbmittel wiederum bei der Extrusion zugegeben wird.

Aus der US-A-2004/0076847 sind Verbundwerkstoffe auf Basis von Holzmehl und Polyvinylchlorid bekannt, bei denen das Holzmehl mit wäßrigen Pigmentdispersionen eingefärbt wurde. Als bevorzugte Pigmente werden Metalloxidpigmente, wie Eisen(III)-oxid und Manganantimontitanat, sowie Kupferphthalocyanin genannt. Außerdem wird die Möglichkeit der Färbung mit wäßrigen Farbstofflösungen erwähnt.

In der EP-A-888 870 werden Verpackungsmaterialien auf Basis von transparenten Verbundwerkstoffen mit niedrigem Holzfaseranteil beschrieben. Es wird erwähnt, daß das transparente Polymer mit Farbstofflösungen eingefärbt oder die Holzfasern mit farbigem Material beschichtet werden können.

Schließlich sind aus der US-A-2002/0040557 Bauteile zur Dachverkleidung auf Basis von Cellulose/Polymer-Verbundwerkstoffen bekannt, die durch Verpressen einer Mischung von Cellulosefasern, Polymer, maleinsäuregepfropftem Polyolefin als Kupplungsmittel, UV-Lichtschutzmittel, thermischem Stabilisator, Eisenoxidpigment, Fungizid und Flammschutzmittel hergestellt werden.

Bei keiner der bekannten Vorgehensweisen zur Herstellung von gefärbten Cellulose/Polymer-Verbundwerkstoffen werden feste Pigmentzubereitungen eingesetzt, die Pigment und wasserlösliches oberflächenaktives Additiv enthalten und einen Pigmentgehalt > 20 Gew.-% aufweisen.

Der Erfindung lag die Aufgabe zugrunde, Farbmittelpräparationen bereitzustellen, mit denen Cellulose/Polymer-Verbundwerkstoffe vorteilhaft eingefärbt werden können.

Demgemäß wurde die Verwendung von festen Pigmentzubereitungen, die als wesentliche Bestandteile
(A) 30 bis 90 Gew.-% mindestens eines Pigments und
(B) 10 bis 70 Gew.-% mindestens eines wasserlöslichen oberflächenaktiven Additivs enthalten, zur Einfärbung von Cellulose partikel/Polymer-Verbundwerkstoffen durch Einfärben der Cellulose partikel gefunden.

Derartige Pigmentzubereitungen sind bekannt und z.B. in den WO-A-03/64540, 03/66743, 04/00903, 04/50770 und 04/46251 beschrieben, wo sie zur Einfärbung von Beschichtungssystemen eingesetzt werden.

Die Pigmentzubereitungen können in Form eines Pulvers oder eines Granulats eingesetzt werden. Von besonderem Vorteil ist, daß sie extrem leicht in Wasser dispergierbar sind und daher färbend wirken, sobald sie mit geringen Mengen Wasser in Kontakt kommen. Hierfür reicht in der Regel die in den Cellulosehackschnitzeln oder -fasern enthaltene Restfeuchtigkeit aus, so daß kein oder nur wenig zusätzliches Wasser in den Fabrikationsprozeß der Cellulose/Polymer-Verbundwerkstoffe eingeschleust und anschließend wieder entfernt werden muß.

Als Komponente (A) können in den erfindungsgemäß zu verwendenden Pigmentzubereitungen organische oder anorganische Pigmente enthalten sein. Selbstverständlich können die Pigmentzubereitungen auch Mischungen verschiedener organischer oder verschiedener anorganischer Pigmente oder Mischungen von organischen und anorganischen Pigmenten enthalten.

Die Pigmente liegen bevorzugt in feinteiliger Form vor und haben dementsprechend üblicherweise mittlere Teilchengrößen von 0,1 bis 5 µm, insbesondere 0,1 bis 3 µm und vor allem 0,1 bis 1 µm.

Je nach dem gewünschten Effekt können die Pigmente in transparenter, halbtransparenter oder deckender Form eingesetzt werden.

Bei den organischen Pigmenten handelt es sich üblicherweise um organische Buntund Schwarzpigmente. Anorganische Pigmente können ebenfalls Farbpigmente (Bunt-, Schwarz- und Weißpigmente) sowie Glanzpigmente sein.

Im folgenden seien als Beispiele für geeignete organische Farbpigmente genannt:

| | |
|---|---|
| - Monoazopigmente: | C.I. Pigment Brown 25; C.I. Pigment Orange 5, 13, 36, 38, 64 und 67; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251; C.I. Pigment Yellow 1, 3, 62, 65, 73, 74, 97, 120, 151,154,168,181,183 und 191; C.I. Pigment Violet 32; |
| - Disazopigmente: | C.I. Pigment Orange 16, 34, 44 und 72; C.I. Pigment Yellow 12, 13, 14, 16, 17, 81, 83, 106, 113, 126, 127, 155, 174, 176, 180 und 188; |
| - Disazokondensationspigmente: | C.I. Pigment Yellow 93, 95 und 128; C.I. Pigment Red 144, 166, 214, 220, 221, 242 und 262; C.I.Pigment Brown 23 und 41; |
| - Anthanthronpigmente: | C.I. Pigment Red 168; |
| - Anthrachinonpigmente: | C.I. Pigment Yellow 147, 177 und 199; C.I. Pigment Violet 31; |
| - Anthrapyrimidinpigmente: | C.I. Pigment Yellow 108; |
| - Chinacridonpigmente: | C.I. Pigment Orange 48 und 49; C.I. Pigment Red 122, 202, 206 und 209; C.I. Pigment Violet 19; |
| - Chinophthalonpigmente: | C.I. Pigment Yellow 138; |
| - Diketopyrrolopyrrolpimgente: | C.I. Pigment Orange 71, 73 und 81; C.I. Pigment Red 254, 255, 264, 270 und 272; |
| - Dioxazinpigmente: | C.I. Pigment Violet 23 und 37; C.I. Pigment Blue 80; |
| - Flavanthronpigmente: | C.I. Pigment Yellow 24; |
| - Indanthronpigmente: | C.I. Pigment Blue 60 und 64; |
| - Isoindolinpigmente: | C.I. Pigmente Orange 61 und 69; C.I. Pigment Red 260; C.I. Pigment Yellow 139 und 185; |
| - Isoindolinonpigmente: | C.I. Pigment Yellow 109, 110 und 173; |
| - Isoviolanthronpigmente: | C.I. Pigment Violet 31; |
| - Metallkomplexpigmente: | C.I. Pigment Red 257; C.I. Pigment Yellow 117, 129, 150, 153 und 177; C.I. Pigment Green 8; |
| - Perinonpigmente: | C.I. Pigment Orange 43; C.I. Pigment Red 194; |
| - Perylenpigmente: | C.I. Pigment Black 31 und 32; C.I.Pigment Red 123, 149, 178, 179, 190 und 224; C.I. Pigment Violet 29; |
| - Phthalocyaninpigmente: | C.I. Pigment Blue 15, 15:1, 15:2,15:3, 15:4, 15:6 und 16; C.I. Pigment Green 7 und 36; |
| - Pyranthronpigmente: | C.I. Pigment Orange 51; C.I. Pigment Red 216; |
| - Pyrazolochinazolonpigmente: | C.I. Pigment Orange 67; C.I. Pigment Red 251; |
| - Thioindigopigmente: | C.I. Pigment Red 88 und 181; C.I. Pigment Violet 38; |
| - Triarylcarboniumpigmente: | C.I. Pigment Blue 1, 61 und 62; C.I. Pigment Green 1; C.I. Pigment Red 81, 81:1 und 169; C.I. Pigment Violet 1, 2, 3 und 27; |
| - C.I. Pigment Black 1 (Anilinschwarz); | |
| - C.I. Pigment Yellow 101 (Aldazingelb); | |
| - C.I. Pigment Brown 22. | |
| Geeignete anorganische Farbpigmente sind z.B.: | |
| - Weißpigmente: | Titandioxid (C.I. Pigment White 6), Zinkweiß, Farbenzinkoxid; Zinksulfid, Lithopone; |
| - Schwarzpigmente: | Eisenoxidschwarz (C.I. Pigment Black 11), Eisen-Mangan-Schwarz, Spinellschwarz (C.I. Pigment Black 27); Ruß (C.I. Pigment Black 7); |
| - Buntpigmente: | Chromoxid, Chromoxidhydratgrün; Chromgrün (C.I. Pigment |
| | |
| | Green 48); Cobaltgrün (C.I. Pigment Green 50); Ultramaringrün; |
| | Kobaltblau (C.I. Pigment Blue 28 und 36; C.I. Pigment Blue 72); Ultramarinblau; Manganblau; |
| | Ultramarinviolett; Kobalt- und Manganviolett; |
| | Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot; |
| | Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange; |
| | Cersulfid (C.I. Pigment Orange 75); |
| | Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzink-sulfid (C.I. Pigment Yellow 37 und 35); Chromgelb (C.I. Pigment Yellow 34); Bismutvanadat (C.I. Pigment Yellow 184). |

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Je nach der gewünschten Anwendung des Verbundwerkstoffs wird man die Pigmente gezielt auswählen. Für Außenanwendungen eignen sich z.B. hochlichtechte Pigmente, wie anorganische Pigmente und organische Pigmente aus der Perylen-, lndanthronund Kupferphthalocyaninreihe. Durch Verwendung von leitfähigem Ruß sind leitfähige Verbundwerkstoffe erhältlich, die für antistatische Auskleidungen von Interesse sind. Mit transparenten Eisenoxidpigmenten, insbesondere FeOOH-Pigmenten, kann der Holzfarbton der Cellulosepartikel vorteilhaft verstärkt werden. Besonders vorteilhaft ist weiterhin, daß diese Pigmente gleichzeitig als UV-Lichtschutzmittel wirken und damit die Stabilität des Cellulose/Polymer-Verbundwerkstoffs erhöhen.

Als Komponente (B) enthalten die erfindungsgemäß zu verwendenden Pigmentzubereitungen mindestens ein wasserlösliches oberflächenaktives Additiv.

Besonders geeignete oberflächenaktive Additive (B) sind nichtionische und anionische wasserlösliche oberflächenaktive Additive.

Besonders geeignete nichtionische Additive (B) basieren auf Polyethern (Additive (B1)).

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind hier vor allem Blockcopolymerisate, insbesondere Polypropylenoxid- und Polyethylenoxidblöcke oder Poly(phenylethylenoxid)-und Polyethylenoxidblöcke aufweisende Polymerisate, und auch statistische Copolymerisate dieser Alkylenoxide geeignet.

Diese Polyalkylenoxide können durch Polyaddition der Alkylenoxide an Startermoleküle, wie an gesättigte oder ungesättigte aliphatische und aromatische Alkohole, Phenol oder Naphthol, das jeweils durch Alkyl, insbesondere C₁-C₁₂-Alkyl, vorzugsweise C₄-C₁₂- bzw. C₁-C₄-Alkyl, substituiert sein kann, gesättigte oder ungesättigte aliphatische und aromatische Amine, gesättigte oder ungesättigte aliphatische Carbonsäuren und Carbonsäureamide hergestellt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, lsodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5000 auf.

Als Beispiele für die obengenannten aromatischen Alkohole seien neben unsubstituiertem Phenol und α- und β-Naphthol Hexylphenol, Heptylphenol, Octylphenol, Nonylphenol, lsononylphenol, Undecylphenol, Dodecylphenol, Di- und Tributylphenol und Dinonylphenol genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R¹-NR²)ₙ-H(R¹:C₂-C₆-Alkylen;R²: Wasserstoff oder C₁-C₆-Alkyl; n: 1 bis 5) entsprechen. Im einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymerisate an Ethylenoxid liegt üblicherweise bei etwa 10 bis 90 Gew.-%.

Die Blockcopolymerisate auf Basis mehrwertiger Amine weisen in der Regel mittlere Molekulargewichte Mₙ von 1 000 bis 40 000, vorzugsweise 1 500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymerisate an Ethylenoxid liegt üblicherweise bei 10 bis 90 Gew.-%.

Die Blockcopolymerisate auf Basis mehrwertiger Alkohole weisen im allgemeinen mittlere Molekulargewichte Mₙ von 1 000 bis 20 000, vorzugsweise 1 000 bis 15 000, auf.

Derartige Alkylenoxidblockcopolymerisate sind bekannt und im Handel z.B. unter den Namen Tetronic^{®} und Pluronic^{®} (BASF) erhältlich.

Als Beispiele für die als Komponente (B) besonders geeigneten wasserlöslichen anionischen oberflächenaktiven Mittel seien Additive auf Basis von Polymerisaten ethylenisch ungesättigter Carbonsäuren (B2), Additive auf Basis von Polyurethanen (B3), Additive auf Basis von sauren Phosphorsäure-, Phosphonsäure-, Schwefelsäure-und/oder Sulfonsäureestern der oben genannten Polyether (B4) und Additive auf Basis von Polykondensationsprodukten von aromatischen Sulfonsäuren und Formaldehyd (B5) genannt.

Selbstverständlich können auch Mischungen mehrerer Additive (B) verwendet werden, also sowohl Mischungen verschiedener nichtionischer Additive als auch Mischungen verschiedener anionischer Additive sowie Mischungen von nichtionischen und anionischen Additiven.

Als anionische wasserlösliche oberflächenaktive Additive auf der Basis von Polymerisaten ungesättigter Carbonsäuren (B2) eignen sich insbesondere Additive aus der Gruppe der Homo- und Copolymerisate von ethylenisch ungesättigten Monocarbonsäuren und/oder ethylenisch ungesättigten Dicarbonsäuren, die keine Säurefunktion enthaltende Vinylmonomere zusätzlich einpolymerisiert enthalten können, der Alkoxylierungsprodukte dieser Homo- und Copolymerisate und der Salze dieser Homo- und Copolymerisate und ihrer Alkoxylierungsprodukte.

Als Beispiele für die carboxylgruppenhaltigen Monomere und die Vinylmonomere seien genannt:
- Acrylsäure, Methacrylsäure und Crotonsäure;
- Maleinsäure, Maleinsäureanhydrid, Maleinsäuremonoester, Maleinsäuremonoamide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind;
- Vinylaromaten, wie Styrol, Methylstyrol und Vinyltoluol; Ethylen, Propylen, lsobuten, Diisobuten und Butadien; Vinylether, wie Polyethylenglykolmonovinylether; Vinylester linearer oder verzweigter Monocarbonsäuren, wie Vinylacetat und Vinylpropionat; Alkylester und Arylester ethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl-(meth)acrylat sowie Phenyl-, Naphthyl- und Benzyl(meth)acrylat; Dialkylester von ethylenisch ungesättigten Dicarbonsäuren, wie Dimethyl-, Diethyl-, Dipropyl-, Diisopropyl-, Dibutyl-, Dipentyl-, Dihexyl-, Di-2-ethylhexyl-, Dinonyl-, Dilauryl- und Di-2-hydroxyethylmaleinat und -fumarat; Vinylpyrrolidon; Acrylnitril und Methacrylnitril, wobei Styrol, Isobuten, Diisobuten, Acrylsäureester und Polyethylenglykolmonovinylether bevorzugt sind.

Als Beispiele für bevorzugte Homopolymerisate dieser Monomere sind insbesondere Polyacrylsäuren zu nennen.

Die Copolymerisate der genannten Monomere können aus zwei oder mehreren, insbesondere drei verschiedenen Monomeren aufgebaut sein. Es können statistische Copolymerisate, alternierende Copolymerisate, Blockcopolymerisate und Pfropfcopolymerisate vorliegen. Als bevorzugte Copolymerisate seien Styrol/Acrylsäure-, Acrylsäure/Maleinsäure-, Acrylsäure/Methacrylsäure-, Butadien/Acrylsäure-, lsobuten/Maleinsäure-, Diisobuten/Maleinsäure- und Styrol/Maleinsäure-Copolymerisate, die jeweils als zusätzliche Monomerbestandteile Acrylsäureester und/oder Maleinsäureester enthalten können, genannt.

Vorzugsweise liegen die Carboxylgruppen der nicht alkoxylierten Homo- und Copolymerisate zumindest teilweise in Salzform vor, um Wasserlöslichkeit zu gewährleisten. Geeignet sind beispielsweise die Alkalimetallsalze, wie Natrium- und Kaliumsalze, und die Ammoniumsalze.

Üblicherweise weisen die nicht alkoxylierten polymeren Additive (B2) mittlere Molekulargewichte M_{w} von 900 bis 250 000 auf. Die für die einzelnen Polymerisate besonders geeigneten Molekulargewichtsbereiche hängen naturgemäß von deren Zusammensetzung ab. Im folgenden werden für verschiedene Polymerisate beispielhaft Molekulargewichtsangaben gemacht: Polyacrylsäuren: M_{w} von 900 bis 250 000; Styrol/Acrylsäure-Copolymerisate: M_{w} von 1 000 bis 50 000; Acrylsäure/Methacrylsäure-Copolymerisate: M_{w} von 1 000 bis 250 000; Acrylsäure/Maleinsäure-Copolymerisate: M_{w} von 2 000 bis 70 000.

Neben diesen Homo- und Copolymerisaten selbst sind auch ihre Alkoxylierungsprodukte als Additive (B2) von besonderem Interesse.

Hierunter sind erfindungsgemäß vor allem die teilweise bis (soweit dies möglich ist) vollständig mit Polyetheralkoholen veresterten Polymerisate zu verstehen. In der Regel beträgt der Veresterungsgrad dieser Polymerisate 30 bis 80 mol-%.

Für die Veresterung geeignet sind insbesondere die Polyetheralkohole selbst, vorzugsweise Polyethylenglykole und Polypropylenglykole, sowie deren einseitig endgruppenverschlossene Derivate, vor allem die entsprechenden Monoether, wie Monoarylether, z.B. Monophenylether, und insbesondere Mono-C₁-C₂₆-alkylether, z.B. mit Fettalkoholen veretherte Ethylen- und Propylenglykole, und die Polyetheramine, die z.B. durch Umwandlung einer terminalen OH-Gruppe der entsprechenden Polyetheralkohole oder durch Polyaddition von Alkylenoxiden an vorzugsweise primäre aliphatische Amine herstellbar sind. Bevorzugt sind dabei Polyethylenglykole, Polyethylenglykolmonoether und Polyetheramine. Die mittleren Molekulargewichte Mₙ der verwendeten Polyetheralkohole und ihrer Derivate liegen üblicherweise bei 200 bis 10 000.

Durch Steuerung des Verhältnisses von polaren zu unpolaren Gruppen können die oberflächenaktiven Eigenschaften der Additive (B2) gezielt eingestellt werden.

Derartige anionische oberflächenaktive Additive (B2) sind ebenfalls bekannt und im Handel z.B. unter den Namen Sokalan^{®} (BASF), Joncryl^{®} (Johnson Polymer), Alcosperse^{®} (Alco), Geropon^{®} (Rhodia), Good-Rite^{®} (Goodrich), Neoresin^{®} (Avecia), Orotan^{®} und Morez^{®} (Rohm & Haas), Disperbyk^{®} (Byk) sowie Tegospers^{®} (Goldschmidt) erhältlich.

Als anionische oberflächenaktive Additive können die erfindungsgemäßen Pigmentzubereitungen weiterhin Additive auf Polyurethanbasis (B3) enthalten.

Erfindungsgemäß sollen dabei unter dem Begriff Polyurethan nicht nur die reinen Umsetzungsprodukte von mehrwertigen Isocyanaten (B3a) mit isocyanatreaktive Hydroxygruppen enthaltenden organischen Verbindungen (B3b) verstanden werden, sondern auch solche Umsetzungsprodukte, die durch den Zusatz von weiteren isocyanatreaktiven Verbindungen, z.B. von primäre oder sekundäre Aminogruppen tragenden Carbonsäuren, zusätzlich funktionalisiert sind.

Diese Additive zeichnen sich gegenüber anderen oberflächenaktiven Additiven durch ihre geringe lonenleitfähigkeit und ihren neutralen pH-Wert aus.

Als mehrwertige Isocyanate (B3a) für die Herstellung der Additive (B3) eignen sich insbesondere Diisocyanate, es können aber auch Verbindungen mit drei oder vier lsocyanatgruppen eingesetzt werden. Es können sowohl aromatische als auch aliphatische Isocyanate verwendet werden.

Als Beispiele für bevorzugte Di- und Triisocyanate seien aufgeführt: 2,4-Toluylendiisocyanat (2,4-TDI), 4,4'-Diphenylmethandiisocyanat (4,4'-MDI), para-Xylylendiisocyanat, 1,4-Diisocyanatobenzol, Tetramethylxylytendiisocyanat (TMXDI), 2,4'-Diphenylmethandiisocyanat (2,4'-MDI) und Triisocyanatotoluol sowie Isophorondiisocyanat (IPDI), 2-Butyl-2-ethylpentamethylendiisocyanat,Tetramethylendiisocyanat, Hexamethylendiisocyanat, Dodecamethylendiisocyanat, 2,2-Bis(4-isocyanatocyclohexyl)propan, Trimethylhexandiisocyanat, 2-Isocyanatopropylcyclohexylisocyanat, 2,4,4- und 2,2,4-Trimethylhexamethylendiisocyanat, 2,4'-Methylenbis(cyclohexyl)diisocyanat, cis-Cyclohexan-1,4-diisocyanat, trans-Cyclohexan-1,4-diisocyanat und 4-Methylcyclohexan-1,3-diisocyanat (H-TDI).

Selbstverständlich können auch Mischungen von Isocyanaten (B3a) verwendet werden. Beispielhaft seien hier genannt: Mischungen von Strukturisomeren von 2,4-Toluylendiisocyanat und Triisocyanatotoluol, z.B. Mischungen aus 80 mol-% 2,4-Toluylendiisocyanat und 20 mol-% 2,6-Toluylendiisocyanat; Mischungen aus cis- und trans-Cyclohexan-1,4-diisocyanat; Mischungen von 2,4- oder 2,6-Toluylendiisocyanat mit aliphatischen Diisocyanaten, wie Hexamethylendiisocyanat und Isophorondiisocyanat.

Als isocyanatreaktive organische Verbindungen (B3b) eignen sich bevorzugt Verbindungen mit mindestens zwei isocyanatreaktiven Hydroxygruppen pro Molekül. Geeignet als Verbindung (B3b) sind jedoch auch Verbindungen, die nur eine isocyanatreaktive Hydroxygruppe pro Molekül aufweisen. Diese monofunktionalisierten Verbindungen können die mindestens zwei isocyanatreaktive Hydroxygruppen pro Molekül enthaltenden Verbindungen bei der Umsetzung mit dem Polyisocyanat (B3a) teilweise oder auch ganz ersetzen.

Im folgenden werden Beispiele für besonders bevorzugte isocyanatreaktive Verbindungen (B3b) mit mindestens zwei isocyanatreaktiven Hydroxygruppen pro Molekül aufgeführt.

Dabei handelt es sich um Polyetherdiole, Polyesterdiole, Polyesterdiole auf Lactonbasis, Diole und Triole mit bis zu 12 C-Atomen, Dihydroxycarbonsäuren, Dihydroxysulfonsäuren, Dihydroxyphosphonsäuren, Polycarbonatdiole, Polyhydroxyolefine und Polysiloxane mit im Mittel mindestens zwei Hydroxygruppen pro Molekül.

Geeignete Polyetherdiole (B3b) sind beispielsweise Homo- und Copolymerisate von C₂-C₄-Alkylenoxiden, wie Ethylenoxid, Propylenoxid und Butylenoxid, Tetrahydrofuran, Styroloxid und/oder Epichlorhydrin, die in Gegenwart eines geeigneten Katalysators, z.B. Bortrifluorid, erhältlich sind. Weiterhin geeignete Polyetherdiole sind durch (Co)Polymerisation dieser Verbindungen in Gegenwart eines Starters mit mindestens zwei aciden Wasserstoffatomen, z.B. von Wasser, Ethylenglykol, Thioglykol, Mercaptoethanol, 1,3-Propandiol, 1,4-Butandiol, 1,6-Hexandiol, 1,12-Dodecandiol, Ethylendiamin, Anilin oder 1,2-Di-(4-Hydroxyphenyl)propan, zu erhalten.

Beispiele für besonders geeignete Polyetherdiole (B3b) sind Polyethylenglykol, Polypropylenglykol, Polybutylenglykol und Polytetrahydrofuran sowie Copolymerisate davon.

Das Molekulargewicht Mₙ der Polyetherdiole beträgt bevorzugt 250 bis 5 000, besonders bevorzugt 500 bis 2 500.

Als isocyanatreaktive Verbindung (B3b) geeignete Polyesterdiole (Hydroxypolyester) sind allgemein bekannt.

Bevorzugte Polyesterdiole (B3b) sind die Umsetzungsprodukte von Diolen mit Dicarbonsäuren oder deren reaktiven Derivaten, z.B. Anhydriden oder Dimethylestern.

Als Dicarbonsäuren eignen sich gesättigte und ungesättigte aliphatische sowie aromatische Dicarbonsäuren, die zusätzliche Substituenten, wie Halogen, tragen können. Bevorzugte aliphatische Dicarbonsäuren sind gesättigte unverzweigte α,ω-Dicarbonsäuren, die 3 bis 22, vor allem 4 bis 12 C-Atome enthalten.

Beispiele für besonders geeignete Dicarbonsäuren sind: Bernsteinsäure, Glutarsäure, Adipinsäure, Korksäure, Azelainsäure, Sebacinsäure, 1,12-Dodecandicarbonsäure, Maleinsäure, Maleinsäureanhydrid, Fumarsäure, Itaconsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Terephthalsäure, Terephthalsäuredimethylester und Isophthalsäuredimethylester.

Als Diole eignen sich insbesondere gesättigte und ungesättigte aliphatische und cycloaliphatische Diole. Die besonders bevorzugten aliphatischen α,ω-Diole sind unverzweigt und weisen 2 bis 12, insbesondere 2 bis 8, vor allem 2 bis 4 C-Atome auf. Bevorzugte cycloaliphatische Diole leiten sich von Cyclohexan ab.

Beispiele für besonders geeignete Diole sind: Ethylenglykol, Propylenglykol, 1,3-Propandiol, 1,4-Butandiol, 2-Methylpropan-1,3-diol, 1,5-Pentandiol, Neopentylglykol, 1,6-Hexandiol, 1,8-Octandiol, 1,10-Decandiol, 1,12-Dodecandiol, cis- und trans-But-2-en-1,4-diol, 2-Butin-1,4-diol und cis- und trans-1,4-Di(hydroxymethyl)cyclohexan.

Das Molekulargewicht Mₙ der Polyesterdiole liegt bevorzugt bei 300 bis 5 000.

Als isocyanatreaktive Verbindung (B3b) geeignete Polyesterdiole auf Lactonbasis basieren insbesondere auf aliphatischen gesättigten unverzweigten ω-Hydroxycarbonsäuren mit 4 bis 22, bevorzugt 4 bis 8 C-Atomen. Es eignen sich auch verzweigte ω-Hydroxycarbonsäuren, bei denen ein oder mehrere -CH₂-Gruppen in der Alkylenkette durch -CH(C₁-C₄-Alkyl)- ersetzt sind.

Beispiele für bevorzugte ω-Hydroxycarbonsäuren sind γ-Hydroxybuttersäure und δ-Hydroxyvaleriansäure.

Selbstverständlich eignen sich auch die oben genannten Diole als isocyanatreaktive Verbindungen (B3b), wobei dieselben Bevorzugungen wie oben gelten.

Ebenfalls als isocyanatreaktive Verbindungen (B3b) geeignet sind Triole, die insbesondere 3 bis 12, vor allem 3 bis 8 C-Atome aufweisen. Beispiel für ein besonders geeignetes Triol ist Trimethylolpropan.

Als isocyanatreaktive Verbindungen (B3b) geeignete Dihydroxycarbonsäuren sind insbesondere aliphatische gesättigte Dihydroxycarbonsäuren, die vorzugsweise 4 bis 14 C-Atome enthalten, besonders geeignet. Ganz besonders geeignet sind Dihydroxycarbonsäuren der Formel

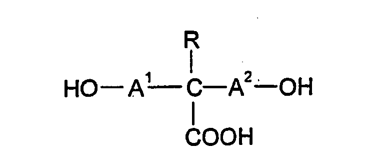

in A¹ und A² gleiche oder verschiedene C₁-C₄-Alkylenreste bedeuten und R für Wasserstoff oder C₁-C₄-Alkyl steht.

Besonders bevorzugtes Beispiel für diese Dihydroxycarbonsäuren ist Dimethylolpropionsäure (DMPA).

Weiterhin eignen sich als isocyanatreaktive Verbindungen (B3b) die entsprechenden Dihydroxysulfonsäuren und Dihydroxyphosphonsäuren, wie 2,3-Dihydroxypropanphosphonsäure.

Der Begriff Dihydroxycarbonsäure soll dabei auch Verbindungen umfassen, die mehr als eine Carboxylfunktion (bzw. Anhydrid- oder Esterfunktion) enthalten. Solche Verbindungen sind durch Umsetzung von Dihydroxyverbindungen mit Tetracarbonsäuredianhydriden, wie Pyromellitsäuredianhydrid oder Cyclopentantetracarbonsäuredianhydrid, im Molverhältnis 2 : 1 bis 1,05 : 1 in einer Polyadditionsreaktion erhältlich und weisen vorzugsweise ein mittleres Molekulargewicht Mₙ von 500 bis 10 000 auf.

Als Beispiele für geeignete Polycarbonatdiole (B3b) sind die Umsetzungsprodukte von Phosgen mit einem Überschuß an Diolen, insbesondere unverzweigten gesättigten aliphatischen α,ω-Diolen mit 2 bis 12, insbesondere 2 bis 8, vor allem 2 bis 4 C-Atomen zu nennen.

Als isocyanatreaktive Verbindung (B3b) geeignete Polyhydroxyolefine sind vor allem α,ω-Dihydroxyolefine, wobei α,ω-Dihydroxybutadiene bevorzugt sind.

Die weiterhin als isocyanatreaktive Verbindung (B3b) geeigneten Polysiloxane enthalten im Mittel mindestens zwei Hydroxygruppen pro Molekül. Besonders geeignete Polysiloxane weisen im Mittel 5 bis 200 Si-Atome (Zahlenmittel) auf und sind vor allem mit C₁-C₁₂-Alkylgruppen, insbesondere Methylgruppen, substituiert.

Als Beispiele für isocyanatreaktive Verbindungen (B3b), die nur eine isocyanatreaktive Hydroxygruppe aufweisen, seien insbesondere aliphatische, cycloaliphatische, araliphatische oder aromatische Monohydroxycarbonsäuren und -sulfonsäuren genannt.

Die Additive auf Polyurethanbasis (B3) werden durch Umsetzung der Verbindungen (B3a) und (B3b) hergestellt, wobei das Molverhältnis von (B3a) zu (B3b) in der Regel 2 : 1 bis 1 : 1, vorzugsweise 1,2 : 1 bis 1: 1,2, beträgt.

Dabei ist es möglich, neben den vorstehend genannten isocyanatreaktiven Verbindungen (B3b) weitere Verbindungen mit isocyanatreaktiven Gruppen zuzusetzen, beispielsweise Dithiole, Thioalkohole, wie Thioethanol, Aminoalkohole, wie Ethanolamin und N-Methylethanolamin, oder Diamine, wie Ethylendiamin, und dadurch Polyurethane herzustellen, die neben den Urethangruppen noch Isocyanuratgruppen, Allophanatgruppen, Harnstoffgruppen, Biuretgruppen, Uretdiongruppen oder Carbodiimidgruppen tragen. Weitere Beispiele für solche isocyanatreaktiven Verbindungen sind aliphatische, cycloaliphatische, araliphatische oder aromatische Carbonsäuren und Sulfonsäuren, die mindestens zwei primäre und/oder sekundäre Aminogruppen tragen.

Selbstverständlich können auch entsprechende nur eine isocyanatreaktive Gruppe aufweisende Verbindungen, beispielsweise Monoalkohole, primäre und sekundäre Monoamine, Monoaminocarbon- und -sulfonsäuren und Mercaptane, zugesetzt werden. Übliche Einsatzmengen liegen bei bis zu 10 mol-%, bezogen auf (B3a).

Vorzugsweise liegen die Carboxylgruppen der Umsetzungsprodukte (B3) zumindest teilweise in Salzform vor, um Wasserlöslichkeit zu gewährleisten. Geeignet sind beispielsweise Alkalimetallsalze, wie Natrium- und Kaliumsalze, und Ammoniumsalze.

Üblicherweise weisen die Additive (B3) mittlere Molekulargewichte M_{w} von 500 bis 250 000 auf.

Durch Steuerung des Verhältnisses von polaren zu unpolaren Gruppen können die oberflächenaktiven Eigenschaften der Additive (B3) gezielt eingestellt werden.

Derartige anionische oberflächenaktive Additive (B3) sind bekannt und im Handel z.B. unter den Namen Borchi^{®} GEN SN95 (Borchers) erhältlich.

Wasserlösliche anionische oberflächenaktive Additive auf der Basis von sauren Phosphorsäure-, Phosphonsäure-, Schwefelsäure- und/oder Sulfonsäureestern von Polyethern (B4) basieren insbesondere auf den Umsetzungsprodukten der oben aufgeführten Polyether (B1) mit Phosphorsäure, Phosphorpentoxid und Phosphonsäure bzw. Schwefelsäure und Sulfonsäure. Hierbei werden die Polyether in die entsprechenden Phosphorsäuremono- oder -diester und Phosphonsäureester bzw. die Schwefelsäuremonoester und Sulfonsäureester überführt. Diese sauren Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.

Derartige anionische oberflächenaktive Additive sind bekannt und im Handel z.B. unter den Namen Nekal^{®} (BASF), Tamol^{®} (BASF), Crodafos^{®} (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia) und Lutensit^{®} (BASF) erhältlich.

Als anionische oberflächenaktive Additive auf der Basis von Polykondensationsprodukten von aromatischen Sulfonsäuren und Formaldehyd (B5) eignen sich insbesondere Naphthalinsulfonsäure/Formaldehyd-Kondensate, die ebenfalls vorzugsweise in Salzform, insbesondere als Natriumsalz, eingesetzt werden.

Die Polykondensationsprodukte (B5) weisen üblicherweise mittlere Molekulargewichte M_{w} von 4 000 bis 15 000 auf.

Derartige anionische oberflächenaktive Additive sind ebenfalls bekannt und z.B. unter dem Namen Tamol^{®} (BASF) erhältlich.

Die Zusammensetzung der erfindungsgemäß zu verwendenden Pigmentzubereitungen kann beliebig gewählt werden. Ist eine Pigmentzubereitung mit besonders hohem Pigmentgehalt im Bereich von 70 bis 90 Gew.-% gewünscht, so setzt man vorteilhaft die Additive (B1) bis (B4) oder deren Mischungen als Komponente (B) ein. Pigmentzubereitungen, die besonders leicht und schnell in Kontakt mit Wasser redispergieren, sind z.B. durch Einsatz von 50 bis 70 Gew.-% Additiv (B), insbesondere des Additivs (B5), und einen entsprechend niedrigeren Pigmentanteil erhältlich.

Die erfindungsgemäß zu verwendenden Pigmentzubereitungen können erhalten werden, indem man das vorzugsweise bereits gefinishte, d.h. die gewünschte Teilchenform und -größe aufweisende, Pigment zunächst zur Desagglomerieung einer Naßzerkleinerung, z.B. Naßmahlung in einer Rührwerkskugelmühle, in Anwesenheit zumindest einer Teilmenge, bevorzugt der Gesamtmenge des Additivs (B) und dann einer Trocknung, z.B. Sprühgranulierung, Wirbelschichttrocknung, Sprühtrocknung, Trocknung im Schaufeltrockner oder Eindampfen und anschließende Zerkleinerung, unterzieht.

Die erfindungsgemäß zu verwendenden Pigmentzubereitungen eignen sich hervorragend zur Einfärbung der in Cellulose/Polymer-Verbundwerkstoffen eingesetzten Cellulosepartikel. Die Partikel können dabei aus allen natürlich vorkommenden Cellulosearten bestehen und feinteilig bis grobteilig sein. Als bevorzugte Beispiele für diese Materialien seien Holzspäne, Holzfasern und Holzstaub genannt.

Die Cellulosepartikel können in verschiedenen Herstellungsstadien eingefärbt werden. So können die als Ausgangsmaterial dienenden Hackschnitzel eingefärbt werden, die Cellulosepartikel können aber auch erst nach ihrer Fertigung vorzugsweise in feuchtem Zustand eingefärbt werden.

Dies soll am Beispiel von Holzfasern näher beschrieben werden. Neben der Einfärbung der als Ausgangsmaterial dienenden Hackschnitzel, bei der geringe Mengen Wasser zugesetzt werden, wenn sie nicht feucht genug sind, ist es ebenso möglich, die nach der Zerkleinerung durch Kochen und Mahlen erhaltenen feuchten Holzfasern mit den Pigmentzubereitungen in Kontakt zu bringen. Die Pigmentzubereitungen können hier gewünschtenfalls gemeinsam mit weiteren Hilfsmitteln für die Verbundwerkstoffherstellung auf die Holzfaser aufgebracht werden.

Die gefärbten Cellulosepartikel können dann, wie für die Fabrikation von Cellulose/Polymer-Verbundwerkstoffen üblich, mit dem Matrixpolymer gemischt und gemeinsam extrudiert werden.

Soll auch die Polymermatrix farbig sein, so kann dies in einfacher Weise durch Einbringen weiterer erfindungsgemäßer Pigmentzubereitung oder allgemein bekannter polymerhaltiger Pigmentkonzentrate, sog. Masterbatches, in den Extrusionsprozeß geschehen.

## Patentansprüche

1. Verwendung von festen Pigmentzubereitungen, die als wesentliche Bestandteile
(A) 30 bis 90 Gew.-% mindestens eines Pigments und
(B) 10 bis 70 Gew.-% mindestens eines wasserlöslichen oberflächenaktiven Additivs enthalten, zur Einfärbung von Cellulosepartikel/Polymer-Verbundwerkstoffen durch Einfärben der Cellulosepartikel.

2. Verwendung nach Anspruch 1, **dadurch gekennzeichnet, dass** die Pigmentzubereitungen als Komponente (B) mindestens ein wasserlösliches oberflächenaktives Additiv aus der Gruppe der nichtionischen Additve auf Basis von Polyethern (B1), der anionischen Additive auf Basis von Polymerisaten ethylenisch ungesättigter Carbonsäuren (B2), der anionischen Additive auf Basis von Polyurethanen (B3), der anionischen Additive auf Basis von sauren Phosphorsäure-, Phosphonsäure-, Schwefelsäure-und/oder Sulfonsäureestern von Polyethern (B4) und der anionischen Additive auf Basis von Polykondensationsprodukten von aromatischen Sulfonsäuren und Formaldehyd (B5) enthalten.

3. Verfahren zur Herstellung von farbigen Cellulosepartikel/Polymer-Verbundwerkstoffen, **dadurch gekennzeichnet, dass** die eingesetzten Cellulosepartikel vor dem Mischen mit dem Matrixpolymer mit Pigmentzubereitungen gemäß Anspruch 1 oder 2 eingefärbt worden sind.

4. Verfahren nach Anspruch 3, **dadurch gekennzeichnet, dass** man als Cellulosepartikel eingefärbte Holzspäne, Holzfasern und/oder Holzstäube einsetzt.

5. Verfahren nach Anspruch 3, **dadurch gekennzeichnet, dass** man die als Ausgangsmaterial zur Herstellung der Holzspäne, Holzfasern und Holzstäube dienenden Holzhackschnitzel mit den Pigmentzubereitungen und gegebenenfalls geringen Mengen Wasser in Kontakt bringt.

6. Verfahren nach Anspruch 5, **dadurch gekennzeichnet, dass** man die durch Kochen und Mahlen erhaltenen feuchten Holzfasern, gewünschtenfalls zusammen mit weiteren Hilfsmitteln für die Verbundwerkstoffherstellung, mit den Pigmentzubereitungen in Kontakt bringt.

7. Verfahren nach Anspruch 3, **dadurch gekennzeichnet, dass** man die Polymermatrix zusätzlich einfärbt.

8. Cellulosepartikel/Polymer-Verbundwerkstoffe, die mit Pigmentzubereitungen gemäß Anspruch 1 oder 2 eingefärbt sind.

## Claims

1. The use of solid pigment preparations comprising, as essential constituents,
(A) 30% to 90% by weight of at least one pigment and
(B) 10% to 70% by weight of at least one water-soluble surface-active additive for coloring cellulose particle polymer compounds or composites by coloring the cellulose particles.

2. The use according to claim 1 wherein the pigment preparations comprise as component (B) at least one water-soluble surface-active additive from the group of nonionic additives based on polyethers (B1), anionic additives based on polymers of ethylenically unsaturated carboxylic acids (B2), anionic additives based on polyurethanes (B3), anionic additives based on acidic phosphoric, phosphonic, sulfuric and/or sulfonic esters of polyethers (B4) and the anionic additives based on polycondensation products of aromatic sulfonic acids and formaldehyde (B5).

3. A process for producing colored cellulose particle polymer compounds or composites, which comprises the cellulose particles utilized having been colored with pigment preparations according to claim 1 or 2 before mixing with the matrix polymer.

4. The process according to claim 3 wherein the cellulose particles utilized comprise colored wood shavings, wood fibers and/or wood dusts.

5. The process according to claim 3 wherein the wood-chopping chips serving as starting material to produce the wood shavings, wood fibers and wood dusts are contacted with the pigment preparations and, if appropriate, small amounts of water.

6. The process according to claim 5 wherein the moist wood fibers obtained by cooking and grinding, if desired together with further auxiliaries for composite or compound production, are contacted with the pigment preparations.

7. The process according to claim 3 wherein the polymer matrix is additionally colored.

8. Cellulose particle polymer composites or compounds colored with pigment preparations according to claim 1 or 2.

## Revendications

1. Utilisation de préparations de pigments qui contiennent comme composants essentiels
(A) 30 à 90 % en poids d'au moins un pigment et
(B) 10 à 70 % en poids d'au moins un additif tensioactif soluble dans l'eau, pour la coloration de matériaux composites polymère/particules de cellulose, par coloration des particules de cellulose.

2. Utilisation selon la revendication 1, **caractérisée en ce que** les préparations de pigments contiennent en tant que composant (B) au moins un additif tensioactif soluble dans l'eau, choisi dans le groupe des additifs non ioniques à base de polyéthers (B1), des additifs anioniques à base de produits de polymérisation d'acides carboxyliques à insaturation éthylénique (B2), des additifs anioniques à base de polyuréthannes (B3), des additifs anioniques à bases d'esters acides d'acide phosphorique, d'acide phosphonique, d'acide sulfurique et/ou d'acide sulfonique de polyéthers (B4) et des additifs anioniques à base de produits de polycondensation d'acides sulfoniques aromatiques et de formaldéhyde (B5).

3. Procédé pour la production de matériaux composites polymère/particules de cellulose colorés, **caractérisé en ce qu'**avant le mélange avec le polymère matrice, les particules de cellulose utilisées ont été colorées avec des préparations de pigments selon la revendication 1 ou 2.

4. Procédé selon la revendication 3, **caractérisé en ce qu'**on utilise en tant que particules de cellulose des copeaux de bois, des fibres de bois ou des poussières de bois, colorés.

5. Procédé selon la revendication 3, **caractérisé en ce qu'**on met en contact les fragments de bois, servant de matériau de départ pour la production des copeaux de bois, des fibres de bois et des poussières de bois, avec les préparations de pigments et éventuellement de faibles quantités d'eau.

6. Procédé selon la revendication 5, **caractérisé en ce qu'**on met en contact avec les préparations de pigments les fibres de bois humides, obtenues par ébouillantage et broyage, si on le désire avec d'autres adjuvants pour la production de matériaux composites.

7. Procédé selon la revendication 3, **caractérisé en ce qu'**en outre on colore la matrice polymère.

8. Matériaux composites polymère/particules de cellulose qui ont été colorés avec des préparations de pigments selon la revendication 1 ou 2.
